# EUROPEAN PATENT APPLICATION

(11) **EP 2 640 067 A2**
(43) Date of publication of application: **18.09.2013**
(21) Application number: 13154585.7
(22) Date of filing: 08.02.2013
(51) Int. Cl.: H04N 5/33

(54) **Personal thermal infrared signaling device**

(30) Priority: 12.03.2012 IL 21858212
(71) Applicant: CI Systems (Israel) LTD., 10551 Migdal HaEmek (IL)
(72) Inventor: Gil, Amir, 36000 Kiriat Tivon (IL); Bigman, Joel, 32882 Haifa (IL)
(74) Representative: Modiano, Micaela Nadia

(57) **Abstract**

A thermal infrared (TIR) signaling device includes and exothermally reactive material such as charcoal, which when ignited, burns and emits an infrared (IR) signal in a TIR wavelength band. The IR signal is modulated to reach a defined field of view in a required blinking pattern. The blinking may be intermittent. Exemplarily, the modulation achieved by a rotating mirror with reflective front- and back-sides, the back-side used to reflect the sky. Optionally, the device may include a detector sensitive to range-finder radiation and operationally connected to an ignition train which includes an igniter for igniting the reactive material and/or a built-in test unit for providing the user with an indication of a device status.

## Description

### CROSS REFERENCE TO RELATED APPLICATIONS

This application claims priority to Israel Patent Application No. 218582 having the same title and filed March 12, 2012.

### FIELD

Embodiments disclosed herein relate in general to thermal infrared (TIR) signaling devices (also referred to as "beacons" or "markers") and in particular to TIR personal signaling devices useful for an individual seeking to be visible to observers which use forward looking infrared (FLIR) systems.

### BACKGROUND

In the past, military night vision systems operated in the near IR spectral band (e.g. star light intensifier systems GEN-III, GEN-IV). In recent years, due to technological advancements in the field of uncooled focal plane arrays (FPAs) and in the field of low-power cryogenic-cooled detectors, many of the sighting systems used by military forces operate in the thermal IR bands (defined as mid wave IR (MWIR) 3-5µm band and long wave IR (LWIR) 8-12µm band). Systems based on these advanced TIR technologies are already available and being purchased by military forces around the world. The TIR based imagers are now implemented in most weapon sights, even for small caliber firearms, and in most viewing systems on ground and airborne platforms, and used both night and day. This change has, in turn, created a need for a personal signaling device that will enable a soldier to mark his location to friendly forces equipped with TIR night vision equipment. The soldier might want to mark himself (to mount the signaling device on his helmet), or to mark his location by placing the signaling device on a surface nearby to his location. General specifications of such a device include signaling to ranges of 2 Km and above, small weight and small size, low power consumption and 360 degree horizontal and greater than 60 degree vertical marking capability. In order to achieve good visibility marking, it is necessary to illuminate the observing thermal IR sight in pulsed fashion with a strong IR source, much like the signal generated by a lighthouse. This serves two purposes:
1. When a scene, observed by a thermal imager, includes a strong IR source, the source creates a phenomenon known as "blooming" on the FPA. In blooming, the electrons generated within one FPA pixel drift to the neighboring pixels due to the high signal incident on the pixel, thereby creating a larger-than-actual spot. This fact is important because the actual size of an IR beacon/marker carried by an infantry soldier is physically smaller then one imager pixel. Were it not for blooming, the image of the marker would only show up as one "hot" pixel on the FPA.
2. A single "hot" pixel (or a small group of pixels) within a full image (which can be 250x320, 640x480 pixels, or larger) does not necessarily draw the attention of the observer to it. To further draw the attention of the observer, and to allow distinguishing the beacon/marker signal from naturally occurring sources of heat in the scene, it is necessary to modulate the marker signal. The optimal modulation rate is on the order of 1-2 "blinks"/sec (1-2 Hz). It is further beneficial to maintain a blink duty cycle lower than 50% with as sharp as possible ON/OFF slopes. The modulation depth is of importance too: the "ON" part of the signal should represent the radiation coming from a blackbody source at a temperature of above a few hundred degrees Celsius, while the "OFF" part of the signal should represent the radiation coming from a blackbody source at a temperature that does not exceed an ambient temperature.
3. The currently known art for beacon/marker devices includes two technologies: a technology represented by products of ICX Photonics (Cambridge, MA, USA) and a technology represented by products of Thermal Beacon Ltd (Kiryat Gat, Israel). ICX Photonics produces a number of products, known by the trade name "markIR". The markIR Tuned Band Emitters utilize a two-dimensional photonic crystal structure to tune and restrict the IR emission for visibility in only the desired spectral region. They provide high energy IR signals with minimal power consumption, thus enabling long-range visibility and prolonged battery operation. Thermal Beacon Ltd. produces a handheld beacon/marker called MK-V, which is based on an electrically powered IR emitter (similar to the wire of an incandescent lamp). Chopping is produced by rotating the output beam of the device. Both products (as well as similar products by other vendors) convert electrical power into IR radiation. The differences between the products lie in the efficiency of this conversion. The disadvantages of both products lie in:
   a) High cost and high overall size/weight. This is a direct outcome of the technology involved and of the power requirements to run these sources over extended periods of use. These disadvantages are not expected to disappear with large quantity production, and, in turn, limit the number of beacons/markers with which military forces can equip themselves leaving a void in the field of friend-foe identification (IFF).
   b) Some of the most commonly fielded FLIRs include automatic gain and offset. These are used to adjust the dynamic range of the sensor to the average temperature of the viewed scene. The abovementioned beacons/markers emit from a small source which is set to a high apparent temperature (typically greater than 500C) when in an ON position and to a lower apparent temperature (typically 120C - 200C) when in an OFF position. Since both temperatures (for ON and OFF) are outside (above) the dynamic range of the sensor, a modulated signal (i.e. blinking) is not seen by it at all.

In view of the disadvantages of existing products/technologies there is a need for and it would be advantageous to have a small/lightweight/inexpensive yet powerful TIR marker/beacon that is observable to all fielded FLIRs at long ranges, day and night.

### SUMMARY

A TIR device according to embodiments disclosed herein includes an exothermally reactive material which, when ignited, emits IR radiation in the thermal IR band; an igniter to ignite the exothermally reactive material source; and a modulator for modulating (i.e. creating a defined "blinking" pattern) and for radiating the IR radiation into a defined field of view to a viewer and for creating a defined blinking pattern with high dynamic range. Exemplarily, the exothermally reactive material is charcoal. The modulator is preferably a rotating mirror rotated by a motor and gear assembly. The mirror has a reflective front surface and a reflective back surface, the latter used to reflect the sky to the viewer. The igniter and the mirror are powered by a power source. Exemplarily, the power source may include one or more batteries. Optionally, the TIR device further includes a built-in test (BIT) unit for allowing the operator to know if the device generates the IR signal. The various components are housed in a housing which is compact, light weight and cool enough to be handheld by a user or mounted on a helmet. Exemplarily, the device surface ("skin") is kept under ca. 60C.

### BRIEF DESCRIPTION OF THE DRAWINGS

Non-limiting embodiments are herein described, by way of example only, with reference to the accompanying drawings, wherein:
FIG. 1 shows a schematic block diagram of an embodiment of a TIR signaling device disclosed herein;
FIGS. 2(a)-(d) show various views of a TIR signaling device disclosed herein, in which the various components and their arrangements are made clearer;
FIGS. 3 (a) shows a cross section of a TIR signaling device disclosed herein with the top mesh section and mirror removed, and with details of a charcoal source assembly in a disposable usnit (section A-A);
FIG. 3(b) shows yet another view of a TIR signaling device disclosed herein, with the top mesh section and mirror removed, showing the ventilation and air flow design;

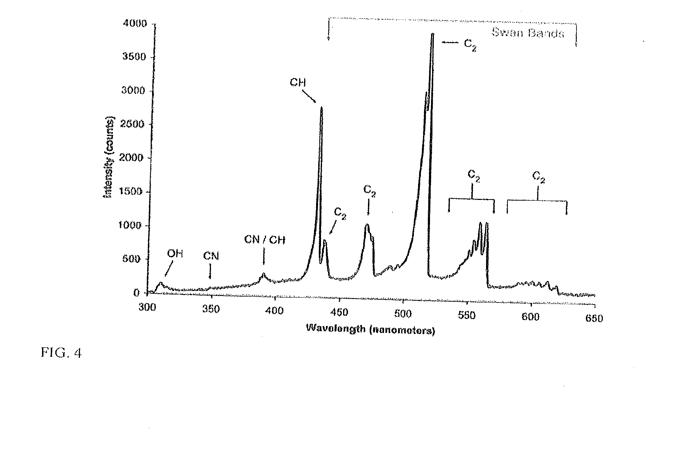

FIG. 4 shows non-continuum molecular emissions in the spectra of a blue butane burner, including Swan bands;
FIG. 5 shows an optical layout of a mirror used in a TIR signaling device;
FIG. 6 shows a TIR signaling device disclosed herein mounted on a helmet.

### DETAILED DESCRIPTION

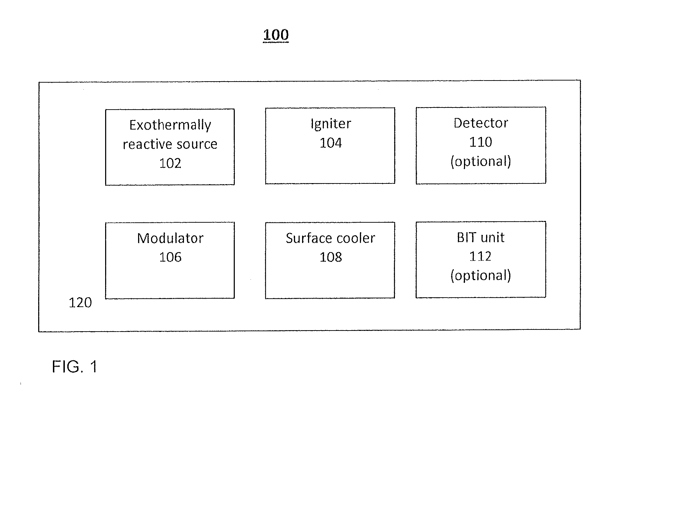

FIG. 1 shows a schematic block diagram of an embodiment of a TIR signaling device disclosed herein, marked **100.** Device **100** includes an exothermally reactive (burning compound) IR source **102** which, when ignited, emits IR radiation in the required wavelength range, in particular in the thermal IR band; an igniter **104** for reliably igniting source **102** and cause it to undergo an exothermic reaction. The igniter may exemplarily be a pyrotechnic igniter, similar to igniters manufactured by Davey Bickford; a modulator **106** for radiating the IR radiation into a defined field of view and for creating a defined blinking pattern with high dynamic range; a surface cooling element **108;** an optional detector **110** sensitive to range-finder radiation; and an optional built-in test (BIT) unit **112** for providing the user with indication of a status of the TIR device. All abovementioned components are housed in a housing **120** to form a small, compact, lightweight unit.

Surface cooling element **108** cools the external surface ("skin") of the device and specific mechanical parts in it. The skin is cooled to a temperature low enough (e.g. 60C) so it can be touched and held by a human hand. An appropriate thermal design assures that the temperature of various components within device **100** does not exceed permitted values. Detector **110** causes the TIR device to start blinking for a preset number of times when a laser range finder is "shot" at the TIR device. The indication provided by BIT unit **112** is useful because the lifetime of the TIR emitting source is limited, typically from 30 minutes to a number of hours, and the user can benefit from the knowledge that the source is still emitting.

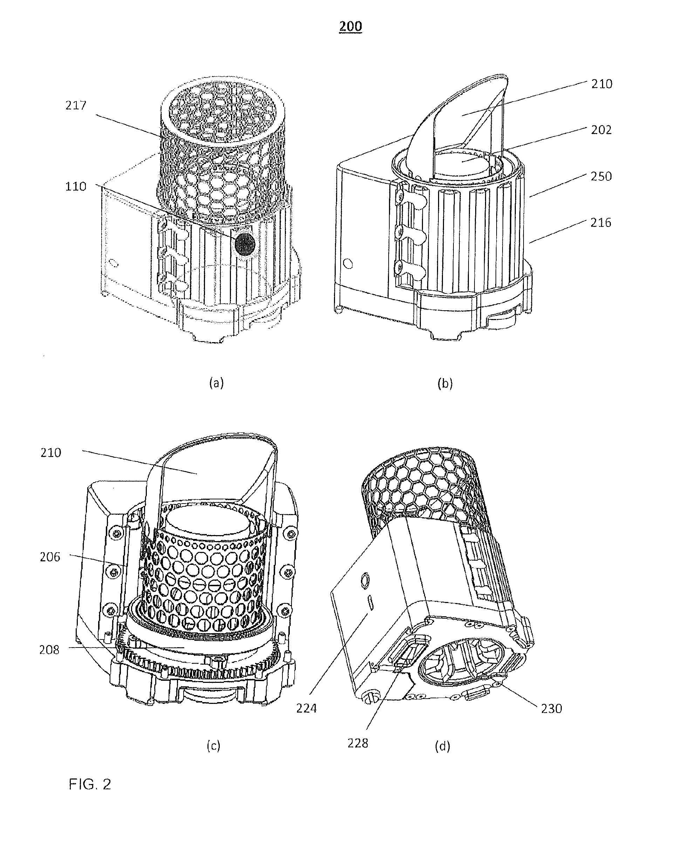

In general, any material or compound which can be ignited and caused to burn such that it emits radiation in the required thermal IR wavelength range can be used as source **102.** Typically, the exothermic reaction involved will bring a surface of the material to a temperature of a few hundred degrees Celsius. This can be achieved for example by igniting carbon-rich mixtures (such as fuels), by the Thermite reaction (the outcome of mixing metal powder and a metal oxide) or by Lime and Aluminum reactions, to name a few. Exemplarily, the TIR source is charcoal. Preferably, as shown in FIGS. 2, the modulator is either a simple mirror or wavelength-selective mirror **210** rotated by a motor and gear assembly **206** (for example a DC-micromotor model 1016M manufactured by Dr. Fritz Faulhaber GMBH & Co. KG, which includes a reduction gear with ratio 10: 1) through a sealed bearing **208.** For a high dynamic range, the TIR device needs to be seen by an observer as being cold during a "blink" cycle (when it is in the OFF position). One way of achieving this goal is to design the rotating mirror such that its back side reflects the sky onto the observer while its front side reflects the hot surface of the charcoal (or similar source) towards the observer

FIGS. 2A-D show various views of a TIR signaling device disclosed herein, in which the various components and their arrangements are made clearer. The device is marked by numeral **200** and uses a charcoal tablet **202** as TIR source and mirror **210** as the modulator. Also shown are the rest of the components mentioned above. Igniter **104** is connected to an electronic board **212** which provides the current required to ignite the charcoal tablet, and is activated by a button **228.** The charcoal tablet and the igniter may be held together by a mechanical structure **218** and form a disposable unit **220.** The charcoal tablet burns and generates a surface temperature of ∼ 450-500C at its top surface. Reflective mirror **210** is a mirror which radiates the charcoal tablet top surface into a defined FOV and at the same time reflects the sky from its back side. The mirror is rotated about a vertical axis by the motor and gear assembly and by the bearing at, exemplarily, a rate of 1-2 Hz, thus creating the blink pattern. The power source (battery) supplies the power to start the igniter and the power to rotate the mirror. Detector **110** is operationally connected to an ignition train (see below) through electronic board **212.** The housing is marked here as **216.** Preferably, housing **216** includes a mesh top section **217a** and a full (opaque) bottom section (not shown). The mesh is > 85% transparent, thereby allowing radiation radiated by the source and reflected from the mirror to be seen in the defined FOV. Alternatively, the top may not need to be a transparent mesh but can be opaque and can be opened such as to expose the mirror to the defined FOV.

One way of implementing such a BIT unit is by using a temperature sensor (not shown), such as a thermocouple, to sense the temperature of an inner surface of the beacon and a LED **224** to provide the indication. The indication is triggered (LED lights up) by a logic circuit which determines if the operation switch is in the "ON" position and if the temperature sensor senses a temperature which is bellow a preset value. The LED may be normally hidden from view (e.g. by a cover), with the cover removed only when the user needs to see the indication. An audio signal or an RF signal may be used instead of a LED for the indication. The implementation of the BIT unit as described would be clear to one of ordinary skill in the art.

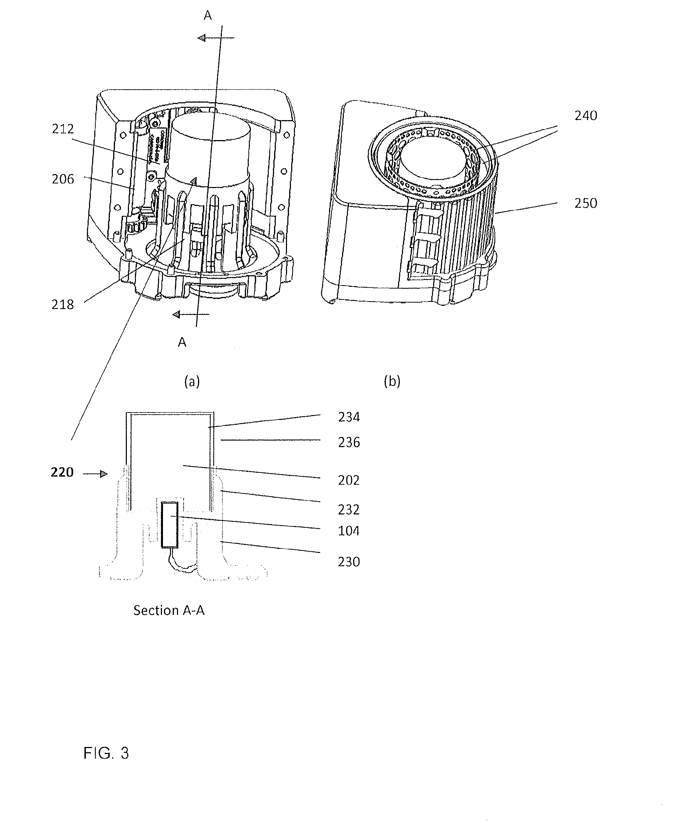

FIGS. 3 (a) shows a cross section of device **200** with the top mesh section and mirror removed, and with details of a unit **220** (section A-A). FIG. 3(b) shows yet another view of device **200,** showing the ventilation and air flow design. Unit **220** comprises, in addition to igniter **104** and charcoal tablet **202** a base **230** (made exemplarily of silicon) for holding the charcoal tablet/igniter assembly, an envelope **232,** a porous material **234** and a mesh wire frame **236** for holding the porous material, charcoal and base together. Porous material **234** is used to reduce slightly the oxygen supply to the charcoal sample while extending the burn time, overcoming a known problem of a relatively short working time of the charcoal. This reduces the charcoal source surface temperature to about 300C. Exemplarily, the porous material may be in the form of a ceramic fiber blanket which withstands very high temperatures. Such a blanket, with a thickness of a few millimeters, limits the air supply to the charcoal while providing desired thermal insulation. Suitable ceramic fiber blanket materials include "Rescor" ceramic fiber blankets made by Cotronics Corp (NY, USA). In some embodiments, the surface temperature (skin) of the TIR device is further controlled by having a double wall **240** around charcoal source **204,** with air flow provided between the walls. The emissivity of an outer skin **250** of the TIR device can be further reduced by careful material selection. In various embodiments, the skin temperature is thus reduced to and held for the duration of its operation at less than ca. 60C.

Charcoal burns from the surface inwards. Hence, the burn time of a charcoal sample depends on the radial dimension of the charcoal tablet. For example; a 1" diameter cylinder with 1" height will have a burn time of the order of 45 minutes. This proves too short a time for an infantry soldier who cannot be attentive to the TIR device while focusing on his/her mission. A TIR device disclosed herein achieves more than 1 hour of burn time for a small cylindrical charcoal tablet 2.5cm in diameter and 2.5cm long and weighing about 10 gram. The burn time limitation may be overcome by enabling a TIR device to work in sequence with other TIR devices. For example, a plurality of TIR devices can be physically connected together, operating such that a first TIR device will turn on a second TIR device as soon as the operation time of the first TIR device is over. The second TIR device will then turn on a third TIR device and so on, to produce long periods of un-attended signaling.

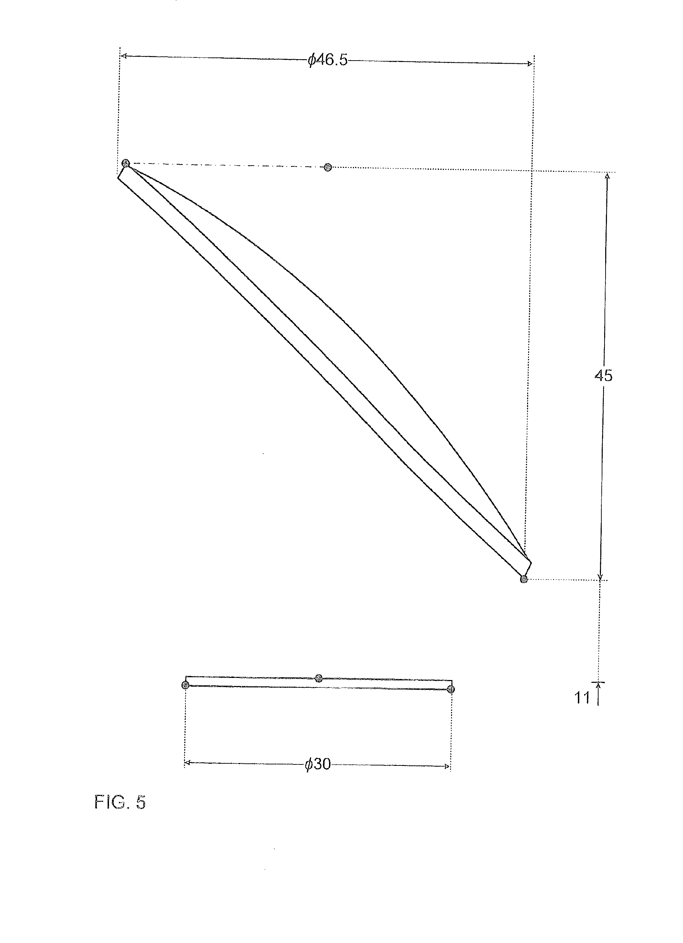

Mirror **210** may be used for removing un-wanted radiation which appears in "Swan bands" (see e.g. FIG. 3) during the burning of samples containing carbon. FIG. 3 shows non-continuum molecular emissions in the spectra of a blue butane burner (an example of a carbon rich sample). Details of an exemplary mirror, with exemplary dimensions in millimeters are given in FIG. 5. Mirror **210** may be a selective mirror. Such a mirror may be used to reflect only TIR radiation towards the viewer while absorbing all other (visible and Near IR) radiation. It is known that while burning, charcoal may emit light in the visible/Near IR bands which may be un-wanted since it may be seen by enemy forces equipped with night vision goggles (NVG) or binoculars. Exemplary mirrors useful for the purposes disclosed herein include mirrors coated with a selective coating such as "Nano Black", a coating manufactured by Acktar Advanced Coatings Ltd. a company with offices in Kiryat-Gat, Israel. The backside of the mirror is used to reflect the sky towards the viewer during part of the rotation period. Since the sky is cold (typically the TIR radiation of the sky is equal to -60C) this will create a very high dynamic range for the "blink". A good backside reflecting surface may be obtained by polishing it.

The ignition of the charcoal requires careful attention. Although considered a flammable substance, charcoal in tablet form (charcoal that is ground, mixed with binders and pressed into a tablet, usually using a circular press) requires a few seconds of direct contact with a flame to ignite in a reproducible fashion. Thus, it is not highly ignitable. An oxidizing agent (e.g. NaClO₃ or KClO₃) is usually added to the charcoal prior to the "tableting" process to speed up the ignition. However, the amount of oxidizing agent that can be added is limited to about 12%-16% (in weight). A higher amount renders the mixture unstable, therefore the need for an ignition train. An ignition train is typically made out of an electronic igniter in contact with another flammable medium which, in turn, ignites the charcoal. To drive the electrical ignition of the system, it is usually required that a capacitor (not shown) on electronic board **212** be charged by the power source and then used to supply sufficient current to the igniter. A typical current value required for an igniter is on the order of a 1.2 Amp current for a few milliseconds. A large enough capacitor is required to supply this current. The major consumption of power is, however, by the motor rotating the mirror (which creates the blinking). To increase the time that the motor can be driven by the power source (batteries), the TIR device may be designed such that it does not "blink" constantly, but rather produces a number of sequential blinks (e.g. 3) and then stops for a few seconds (e.g. 6 seconds) before blinking again. This represents a type of "intermittent" blinking. Such intermittent blinking is tactically acceptable, serves to increase the operation time while keeping the weight of the TIR device to a minimum.

FIG. 5 shows an optical layout of mirror **210.** The dimensions (in mm) shown are exemplary and should by no means be considered as limiting. The 30 mm diameter at the bottom of the image represents the top end of the charcoal tablet, with the mirror shown above it. This mirror sends the radiation from the source into a field of ca. - 10 to + 80 degrees in elevation, with some degradation at the maximal field points but with a large footprint when viewed on-axis.

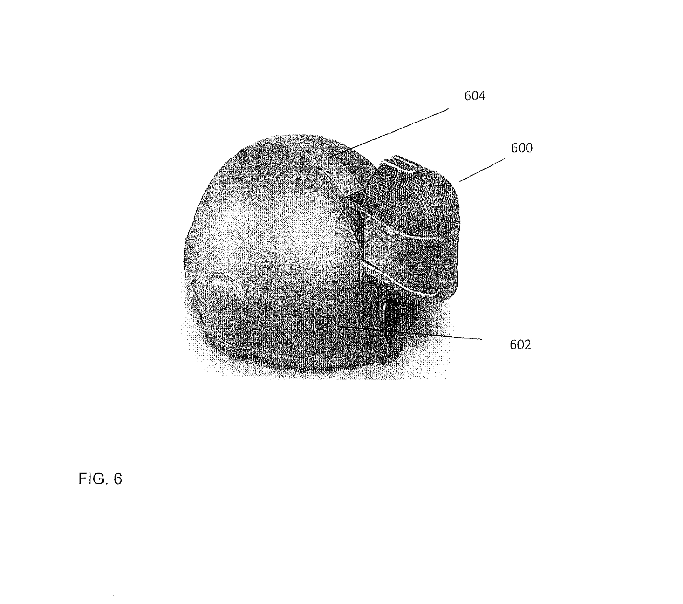

FIG. 6 shows a TIR signaling device **200** mounted on a helmet **602.** The figure gives a good indication of the relative sizes of the device and helmet. The device can be attached to the helmet by various means, for example a band **604** clipped to the helmet. Alternatively, the device can by positioned near the individual using it.

In conclusion, embodiments disclosed herein provide low cost TIR signaling devices that produce a strong blink signal which can be seen by thermal imaging systems from ranges exceeding 2Km. The signal is due to heat released in a chemical reaction involving charcoal. The heat, coupled with a high emissivity surface, creates the required IR output. The charcoal source (tablet) is disposable, lasts for a while, and can be replaced after it burns out. This provides a far more effective approach in terms of energy/weight and energy/ size than current approaches. A small 10 gram piece of charcoal (for example) can burn at 400-500C for > 1 hour. The $/BTU of this kind of heat/radiation generation is lower by a large factor than that of any known electrical/electronic TIR signaling device or method. To achieve identical radiation using competing electrical/electronic-based technologies would require a very large electrical power source.

For strong signaling in the long wave IR band (LWIR, 8-12µm) it is physically advantageous to emit from a larger surface at lower temperatures than to emit high temperatures from a smaller surface. This can be explained by the fact that an increase in emitter temperature does not create a very large change in the LWIR (the change in the MWIR is much stronger). The technology disclosed herein allows heating of large emitting surfaces, while known electrical/electronic-based technologies inherently produce small emitters which need to be amplified by optics, usually at the cost of reducing the field of view of the TIR device.

While this disclosure describes a limited number of embodiments, it will be appreciated that many variations, modifications and other applications of such embodiments may be made. The disclosure is to be understood as not limited by the specific embodiments described herein, but only by the scope of the appended claims.

## Claims

1. A thermal infrared (TIR) signaling device comprising:
a) an exothermally reactive material which, when ignited, emits IR radiation;
b) an igniter to ignite the exothermally reactive material; and
c) a modulator for radiating the IR radiation into a desired field of view in a required blink pattern.

2. The TIR device of claim 1, wherein the exothermally reactive material is charcoal.

3. The TIR device of claim 2, wherein the modulator includes a rotating mirror having reflecting front and back sides.

4. The TIR device of claim 1, further comprising a built-in test (BIT) unit for providing the user with an indication of a device status.

5. The TIR device of claim 1, further comprising a detector sensitive to range-finder radiation and operationally connected to an ignition train which includes the igniter.

6. The TIR device of claim 1, further comprising cooling means for cooling a device skin and selected device mechanical components to a desired temperature.

7. The TIR device of claim 6, wherein the cooling means include a porous material surrounding at least partially the charcoal.

8. The TIR device of claim 1, further comprising a power source used to ignite the exothermally reactive material and actuate the modulator.

9. The TIR device of claim 1, wherein the TIR device is adapted to provide intermittent blinking.

10. The TIR device of claim 9, wherein the intermittent blinking includes a repeating sequence formed by a plurality of blinks followed by a non-blink period.

11. The TIR device of claim 3, wherein the TIR device is adapted to provide intermittent blinking.

12. The TIR device of claim 11, wherein the intermittent blinking includes a repeating sequence formed by a plurality of blinks followed by a non-blink period.

13. The TIR device of claim 1, wherein the IR radiation is in a thermal IR wavelength band.

14. The TIR device of claim 3, further comprising a motor and gear assembly for rotating the mirror.

15. The TIR device of claim 14, further comprising a housing for housing the reactive material, the igniter, the rotating mirror and the motor and assembly gear.
